# EUROPÄISCHE PATENTSCHRIFT

(11) **EP 2 597 420 B1**
(45) Veröffentlichungstag und Bekanntmachung des Hinweises auf die Patenterteilung: **09.07.2014**
(21) Anmeldenummer: 13000946.7
(22) Anmeldetag: 03.11.2009
(51) Int. Cl.: G01B 21/04, G01B 11/00, B25J 1/00, G01S 1/00, G01S 5/16, B25J 9/16

(54) **Handgerät und Verfahren zur Erfassung der Raumposition eines Arbeitspunktes eines Manipulators**
Hand-held device and method for determining the spatial position of an operating point of a manipulator
Appareil manuel et procédé de détermination de la position spatiale d'un point de travail d'un manipulateur

(30) Priorität: 17.12.2008 DE 102008062624
(43) Veröffentlichungstag der Anmeldung: 29.05.2013
(62) Teilanmeldung aus: 09013800.9
(73) Patentinhaber: KUKA Roboter GmbH, 86165 Augsburg (DE)
(72) Erfinder: Hietmann, Gerhard, 86405 Herbertshofen (DE); Sedlmayr, Andreas, 82256 Fürstenfeldbruck (DE)
(74) Vertreter: Schlotter, Alexander Carolus Paul

(56) Entgegenhaltungen:
- WO-A1-01/30545
- DE-A1- 10 048 952
- US-A1- 2003 221 326

## Beschreibung

Die vorliegende Erfindung betrifft ein tragbares Handgerät und ein Verfahren zur Erfassung der Raumposition eines Arbeitspunktes eines Manipulators, insbesondere eines Roboters.

In vielen Anwendungsfällen fährt ein Manipulator beim Ausführen eines Programms mit einem Werkzeugreferenzkoordinatensystem, dem sogenannten Tool Center Point ("TCP"), verschiedene Arbeitspunkte an, deren Raumpositionen vorher in der Manipulatorsteuerung abgespeichert wurden. Beispiele sind etwa Schweißpunktfolgen oder Lackierbahnen, die von Industrierobotern abgefahren werden. Arbeitspunkte können jedoch gleichermaßen auch durch andere manipulatorfeste Referenzkoordinatensystem angefahren werden, beispielsweise durch einen Handwurzelpunkt.

Vorliegend wird als Position eines Punktes allgemein seine Lage, i.e. die Abstandskomponenten des Punktes zum Ursprung eines Bezugskoordinatensystems, und/oder die Orientierung eines punktfesten Koordinatensystems relativ zu einem Bezugskoordinatensystem bezeichnet. Die Position eines Arbeitspunktes im Raum kann daher beispielsweise durch kartesische Koordinaten (x, y, z) des TCP-Ursprungs in einem Koordinatensystem, das im Grundgestell eines Manipulators oder einer Bearbeitungszelle definiert ist, und EULER- oder KARDAN-Winkel (α, β, γ) des TCPs gegen dieses Koordinatensystem beschrieben werden.

Um diesen Arbeitspunkt anzufahren, muss ein Manipulator in seinen Gelenken bestimmte Gelenkstellungen, beispielsweise Drehwinkel, einnehmen, wobei bei bekannter Kinematik des Manipulators Gelenkstellungen und Position des TCPs im Arbeitsraum durch Lösen der Vorwärts- bzw. Rückwärtskinematik ineinander transformiert werden können. Eine Raumposition eines Arbeitspunktes eines Manipulators im Sinne der vorliegenden Erfindung kann daher gleichermaßen beispielsweise im Arbeitsraum, etwa durch kartesische Koordinaten und Orientierungswinkel in einem Bezugskoordinatensystem, oder durch Gelenkstellungen des Manipulators beschrieben und entsprechend in der Manipulatorsteuerung abgespeichert werden.

Um solche Arbeitspunkte abzuspeichern, ist neben der offline-Programmierung und dem Teachen durch Anfahren der Arbeitspunkte mit dem Manipulator aus der WO 01/30545 A1 bereits ein tragbares Handgerät bekannt, dessen Raumposition durch ein optisches Trackingsystem und Beschleunigungsaufnehmer erfasst wird, und das ein Tastelement mit einem definierten Referenzpunkt aufweist. Der Bediener führt diesen Referenzpunkt durch Bewegen des Handgerätes in den gewünschten Arbeitspunkt, wo die Raumposition des Referenzpunkts mittels des Trackingsystems und der Beschleunigungsaufnehmer erfasst und als Position des Arbeitspunktes abgespeichert wird.

Die DE 100 48 952 A1 beschreibt hierzu ein tragbares Handgerät nach dem Oberbegriff des Anspruchs 1 sowie ein Verfahren nach dem Oberbegriff des Anspruchs 11. Diese Lösung weist jedoch einige unabhängige Nachteile auf.

Allgemein wird in der DE 100 48 952 A1vorgeschlagen, ein Tastelement relativ zu Sensoren des Handgerätes zu verschwenken, um den Blickkontakt zwischen den optischen Sensoren und Referenzmarkierungen eines Trackingsystems zu erleichtern. Damit wird jedoch nicht nur die Transformation zwischen der erfassten Raumposition der Sensoren und dem Referenzpunkt des Tastelementes verändert, was eine zusätzliche Erfassung dieser veränderlichen Transformation erfordert und eine zusätzliche Fehlerquelle darstellt. Es vereinfacht auch nicht die Bedienung des Handgerätes, da die zu bedienende Tastatur und das abzulesende Display mit den Sensoren verbunden sind. Müssen die Sensoren durch Drehen um den im Arbeitspunkt verbleibenden Referenzpunkt in eine bestimmte Position gebracht werden, um den Blickkontakt zu den Referenzmarkierungen zu ermöglichen, beispielsweise durch die offenbarte Verschwenkung von Tastelement und Sensoren gegeneinander, kann dies Tastatur und Display in eine für den Bediener ungünstige Position bringen.

Die US 2003/0221326 A1 offenbart ein tragbares System zur Vermessung auf Basis einer kinematisch-seriellen Gelenksstruktur, welches eine Mensch-Maschine Schnittstelle aufweist. Am Kopfelement der Armstruktur befindet sich der Referenzpunkt für die Vermessung. Die Positionserfassung erfolgt durch Winkelencoder, die in den Gelenken verbaut sind. Vorzugsweise basiert die Encodermessung auf einer LaserlichtQuelle.

Zum anderen können über die Tastatur bisher nur Makros initialisiert oder andere Programmierbefehle eingegeben werden, um die Position zu speichern und ein Programm zu editieren. Müssen beim Erfassen der Arbeitspunkte jedoch Zusatzachsen bewegt werden, beispielsweise ein zu bearbeitendes Werkstück mit einem Dreh-Kipp-Tisch bewegt werden, um Zugang zu verschiedenen Arbeitspunkten zu erhalten, muss der Bediener diese Achsen weiterhin über eine separate Steuerung bedienen.

Bei Erfassen der Raumpositionen kann es aufgrund von Mess- und Rechentoleranzen vorkommen, dass die gespeicherten Arbeitspunkte fälschlich innerhalb der Werkstückskontur liegen. Das Korrigieren solcher gespeicherter Raumpositionen ist umständlich.

Aufgabe der vorliegenden Erfindung ist es, die Erfassung von Arbeitspunkt-Raumpositionen zu verbessern und wenigstens einen der vorgenannten Nachteile zu vermeiden.

Diese Aufgabe wird durch ein tragbares Handgerät mit den Merkmalen des Anspruchs 1 bzw. ein Verfahren mit den Merkmalen des Anspruchs 11 gelöst. Anspruch 12 stellt ein entsprechendes Computerprogrammprodukt unter Schutz, die Unteransprüche betreffen vorteilhafte Weiterbildungen.

Ein erfindungsgemäßes tragbares Handgerät zur Erfassung der Raumposition wenigstens eines Arbeitspunktes eines Manipulators, insbesondere eines Roboters, umfasst eine Handhabungseinrichtung zur Handhabung des Handgerätes durch einen Bediener, eine Positionserfassungseinrichtung, deren Raumposition erfassbar ist, und ein mit der Positionserfassungseinrichtung verbundenes Tastelement, an dem ein Referenzpunkt definiert ist.

Die Handhabungseinrichtung kann insbesondere eine Eingabeeinrichtung zur Eingabe durch den Bediener, beispielweise eine oder mehrere Tasten, Schalter oder dergleichen, eine Ausgabeeinrichtung zur Ausgabe an den Bediener, insbesondere eine oder mehrere Anzeigen, und/oder einen Handgriff für den Bediener aufweisen. Die Positionserfassungseinrichtung kann einen oder mehrere Marker, die durch eine bezugssystemfeste Trackingeinrichtung erfassbar sind, oder Sensoren aufweisen, die ihrerseits Referenzmarkierungen eines Bezugssystems erfassen, und so eine Erfassung der Raumposition der Positionserfassungseinrichtung ermöglichen.

Nach einem ersten Aspekt der vorliegenden Erfindung wird nun vorgeschlagen, dass die Handhabungseinrichtung und die Positionserfassungseinrichtung gelenkig miteinander verbunden sind. Dies ermöglicht es, einerseits die Positionserfassungseinrichtung in eine gewünschte Position zu bringen, in der beispielsweise ihre Raumposition gut erfassbar ist, da zum Beispiel ausreichend viele Marker für eine optische Trackingeinrichtung sichtbar sind, oder in der beispielsweise das mit der Positionserfassungseinrichtung verbundene Tastelement eine SollPosition eines Manipulatorwerkzeuges simuliert, und zugleich andererseits die Handhabungseinrichtung in eine vorteilhafte Raumposition zu bringen, in der beispielsweise ihre Anzeige gut sichtbar, ihre Tastatur gut zugänglich oder ihr Griff ergonomisch günstig platziert ist.

Hierzu können in einer bevorzugten Ausführung Handhabungseinrichtung und Positionserfassungseinrichtung in einem Drehgelenk mit einem oder mehreren, vorzugsweise drei Drehfreiheitsgraden, wie sie ein Kugelgelenk zur Verfügung stellt, miteinander verbunden sein. Zusätzlich oder alternativ sind jedoch auch translatorische Gelenke wie Scharniere, Parallelogrammführungen, Linearachsen oder dergleichen möglich.

Freiheitsgrade des Gelenks zwischen Handhabungs- und Positionserfassungseinrichtung sind in einer bevorzugten Ausführung sperrbar oder selbstsperrend. Beispielsweise kann ein Kugelgelenk durch Reibung selbstsperrend in einer Drehstellung verbleiben, bis der Bediener diese durch Überwinden einer Mindestbedienkraft verstellt. Gleichermaßen kann ein Kugelgelenk in bestimmten Drehstellungen verrasten oder es können, beispielsweise durch Zustellschrauben, Aktivieren von Haltemagneten, Aktivieren von Bremsen oder dergleichen eine oder mehrere Drehrichtungen gesperrt werden. Gleiches gilt natürlich auch für translatorische Achsen entsprechender Gelenke.

In einer bevorzugten Ausführung sind Handhabungseinrichtung und Positionserfassungseinrichtung lösbar miteinander verbunden, was die Kombination verschiedener Handhabungseinrichtungen, beispielsweise mit unterschiedlichen Anzeigen und/oder Bedienelementen, mit verschiedenen Positionserfassungseinrichtungen, die beispielsweise zur Erfassung durch unterschiedliche Trackingeinrichtungen eingerichtet sind, ermöglicht.

Entsprechend kann auch das mit der Positionserfassungseinrichtung verbundene Tastelement lösbar an der Positionserfassungseinrichtung befestigt sein, um eine Kombination unterschiedlicher Positionserfassungseinrichtungen mit verschiedenen Tastelementen zu ermöglichen, die beispielsweise unterschiedliche geometrische Abmessungen zum Antasten von Arbeitspunkten in unterschiedlichen Umgebungen oder zur Simulation eines Werkzeugs aufweisen können. Auch solche lösbar an der Positionserfassungseinrichtung verbundene Tastelemente sind vorzugsweise relativ zu der Positionserfassungseinrichtung unbeweglich, um eine konstante Transformation zwischen der erfassten Raumposition der Positionserfassungseinrichtung und des Referenzpunktes an dem Tastelement zu gewährleisten.

In einer bevorzugten Ausführung ist in einem Griff der Handhabungseinrichtung ein Zustimmungsschalter angeordnet, der vom Bediener betätigt werden muss, um beispielsweise bei Bedarf Manipulator- oder Zusatzachsen verfahren zu können, und/oder um sicherzustellen, dass in der Umgebung des Bedieners angeordnete Manipulatoren diesen nicht gefährden. Besonders bevorzugt ist der Zustimmungsschalter mit dem Zeigefinger betätigbar, so dass andere Schalter insbesondere mit dem Daumen der die Handhabungseinrichtung haltenden Hand bedient werden können.

Um eine effiziente Erfassung sinnvoller, mit dem Manipulator realisierbarer Arbeitspunkte zu erleichtern, kann das Tastelement, gegebenenfalls zusammen mit der Positionserfassungseinrichtung, als Dummy-Werkzeug ausgebildet sein, i.e. im Wesentlichen die Form wenigstens eines Teils einer Außenkontur des Werkzeugs aufweisen, mit dem der Manipulator die Arbeitspunkte anfahren soll. Bevorzugt entspricht der an dem Tastelement definierte Referenzpunkt dem TCP.

Die Positionserfassungseinrichtung weist in einer bevorzugten Ausführung einen oder mehrere, vorzugsweise wenigstens drei, aktive und/oder passive Marker auf, die zur Erfassung durch eine Trackingeinrichtung ausgebildet sind. Hierbei kann es sich beispielsweise um emittierende, aktive oder reflektierende, passive Marker vorgegebener geometrischer Gestalt handeln, die durch eine optische Trackingeinrichtung, welche beispielsweise im sichtbaren oder ultravioletten Bereich arbeitet, oder eine akustische Trackingeinrichtung erfassbar sind, welche beispielsweise im Ultraschallbereich arbeitet.

Zusätzlich oder alternativ kann die Positionserfassungseinrichtung auch einen oder mehrere, vorzugsweise wenigstens drei Sensoren aufweisen, beispielsweise Beschleunigungssensoren, aber auch Sensoren eines inertialen Messsystems oder Sensoren, die ihrerseits aktive oder passive Marker eines Bezugssystems, beispielsweise optisch oder akustisch, erfassen und so ebenfalls die Erfassung der Raumposition der Positionserfassungseinrichtung und damit des Referenzpunktes des mit ihr verbundenen Tastelementes ermöglichen.

In einer bevorzugten Ausführung weist die Positionserfassungseinrichtung mehrere Marker und/oder Sensoren auf, die über den Umfang eines oder mehrerer Ringe verteilt sind, die sich um die, vorzugsweise im Wesentlichen zylindrische, Positionserfassungseinrichtung herum erstrecken. Dies erleichtert die Erfassung der Marker eines Ringes bzw. Erfassung durch Sensoren eines Ringes aus allen Richtungen normal zur Mittelsenkrechten durch den Mittelpunkt dieses Ringes und gestattet insbesondere eine Verdrehung der Positionserfassungseinrichtung um diese Mittelsenkrechte, ohne die Erfassung zu beeinträchtigen.

Vorzugsweise weist die Positionserfassungseinrichtung wenigstens zwei solcher Ringe auf, deren Mittelsenkrechten nicht koaxial sind und insbesondere miteinander einen Winkel größer oder gleich 10° einschließen. Dies erhöht die Sichtbarkeit bei Blickrichtung der Trackingeinrichtung bzw. Sensoren entlang einer Mittelsenkrechten eines Ringes auf die Marker bzw. Sensoren des anderen Ringes.

Häufig wird ein Werkzeug in einer bestimmten Hauptrichtung geführt und auf ein Werkstück aufgesetzt, die unter einem, beispielsweise prozessbedingten Winkel ausgerichtet ist, zum Beispiel im Wesentlichen normal zu einer Werkstückoberfläche. Zum Beispiel wird eine Klebepistole oder eine Schweißzange häufig vertikal zu einer horizontal ausgerichteten Werkstückoberfläche geführt.

Kameras einer Trackingeinrichtung werden andererseits bevorzugt ebenfalls unter bestimmten Winkeln, beispielsweise unter etwa 45° gegen die Flächennormale der Werkstückoberfläche geneigt. Ist nun eine Erfassungsrichtung von Markern bei aufgesetztem Handgerät ebenfalls im Wesentlichen unter etwa 45° gegen die Flächennormale der Werkstückoberfläche geneigt, ergibt sich eine optimale Erfassbarkeit durch die Kameras, die im Wesentlichen direkt in Erfassungsrichtung auf die Marker blicken. Allgemein erlaubt die Ausrichtung von Marker- bzw. Sensorerfassungsrichtung unter einem bestimmten Winkel eine Positionierung des Handgerätes innerhalb eines Kegels mit diesem Öffnungswinkel, ohne die Erfassung zu beeinträchtigen.

In einer bevorzugten Ausführung ist daher eine Erfassungsrichtung wenigstens eines Markers bzw. Sensors, in der die Erfassung besonders günstig ist, beispielsweise die optische Achse eines Sensors oder die Flächennormale eines reflektierenden Markers, unter einem Winkel gegen eine Hauptrichtung des Tastelementes und/oder der Positionserfassungseinrichtung, beispielsweise eine Längs- oder Symmetrieachse, eine bevorzugte Aufsetzrichtung des Tastelementes, eine Stoßrichtung des Dummy-Werkzeuges oder, bei in Erfassungsstellung aufgesetztem Dummy-Werkzeug, eine Flächennormale eines Werkstücks, auf dem der zu erfassende Arbeitspunkt liegt, geneigt, der zwischen 15° und 75°, insbesondere zwischen 30° und 60° liegt, und besonders bevorzugt im Wesentlichen 45° beträgt.

Erfindungsgemäß wird vorgeschlagen, dass die Handhabungseinrichtung eine Eingabeeinrichtung zur Eingabe durch den Bediener aufweist, die zur Steuerung einer Zusatzachse des Manipulators, insbesondere eines Werkzeugtisches eingerichtet ist.

Hierdurch kann der Bediener insbesondere zum Antasten verschiedener Arbeitspunkte in unterschiedlichen Werkstückpositionen durch das Handgerät Zusatzachsen des Manipulators, beispielsweise die Drehachsen eines Dreh- und/oder Kipp-Tisches, auf dem das Werkstück fixiert ist, betätigen, um das Werkstück geeignet, insbesondere jeweils so zu positionieren, wie es später bei Bearbeitung des Werkstücks durch den Manipulator angeordnet ist, ohne hierzu ein weiteres Eingabegerät handhaben zu müssen.

Nach einem dritten Aspekt der vorliegenden Erfindung, bei dem bevorzugt eine oder mehrere der vorgenannten Merkmale des ersten und/oder zweiten Aspekts verwirklicht sind, der jedoch auch ohne diese die erfindungsgemäße Aufgabe löst, wird vorgeschlagen, dass zunächst eine Raumposition eines Referenzpunktes eines Handgerätes erfasst wird, und diese anschließend vom Bediener in einer vorgegebenen Richtung, insbesondere einer Stoßrichtung eines Werkzeugs oder einer Flächennormale auf eine Werkstückoberfläche, zu verschieben, indem beispielsweise ein Verschiebebetrag eingegeben wird. Die solcherart gegenüber der erfassten Raumposition in der vorgegebenen Richtung verschobene Position wird dann als Raumposition des Arbeitspunktes des Manipulators erfasst.

Wenn bei der Erfassung und Abspeicherung von Arbeitspunktpositionen aufgrund von Mess- und Rechentoleranzen gespeicherte Arbeitspunkte, beispielsweise Schweiß- oder Klebepunkte, fälschlich innerhalb der Werkstückskontur liegen, so dass die Gefahr besteht, dass das manipulatorgeführte Werkzeug beim Ausführen eines auf solchen Raumpositionen basierenden Programms durch den Manipulator in das Werkstück eindringt und dabei Werkstück und/oder-zeug beschädigt, kann der Bediener dies korrigieren, indem er innerhalb der Werkstückkontur liegende abgespeicherte Arbeitspunkte aus der Werkstückkontur heraus verschiebt. Dies ist jedoch, insbesondere bei einer Vielzahl von gespeicherten Raumpositionen, offline ohne Werkstück, schwierig. Hier erleichtert die vorliegende Erfindung nach ihrem dritten Aspekt die Erfassung einer vorteilhaften, außerhalb des Werkstücks liegenden Arbeitspunktpositionen, indem eine Richtung, beispielsweise die Stoßrichtung eines Werkzeugs oder die Flächennormale einer Werkstückoberfläche, vorzugsweise automatisch, vorgegeben und die zunächst fälschlich erfasste Position in dieser Richtung verschoben und danach als - nun außerhalb des Werkstücks liegende - Arbeitspunktposition abgespeichert wird.

Weitere Vorteile und Merkmale ergeben sich aus den Unteransprüchen und den Ausführungsbeispielen. Hierzu zeigt, teilweise schematisiert:
- Fig. 1:: ein tragbares Handgerät nach einer Ausführung der vorliegenden Erfindung in perspektivischer Ansicht;
- Fig. 2:: das auf eine Werkstückoberfläche aufgesetzte Handgerät nach Fig. 1 in einer Seitenansicht;
- Fig. 3:: das Handgerät nach Fig. 1 in der Draufsicht;
- Fig. 4-6:: das Handgerät nach Fig. 1 mit in verschiedene Stellungen verschwenkter Positionserfassungseinrichtung; und
- Fig. 7: ein tragbares Handgerät nach einer weiteren Ausführung der vorliegenden Erfindung in einer Seitenansicht.

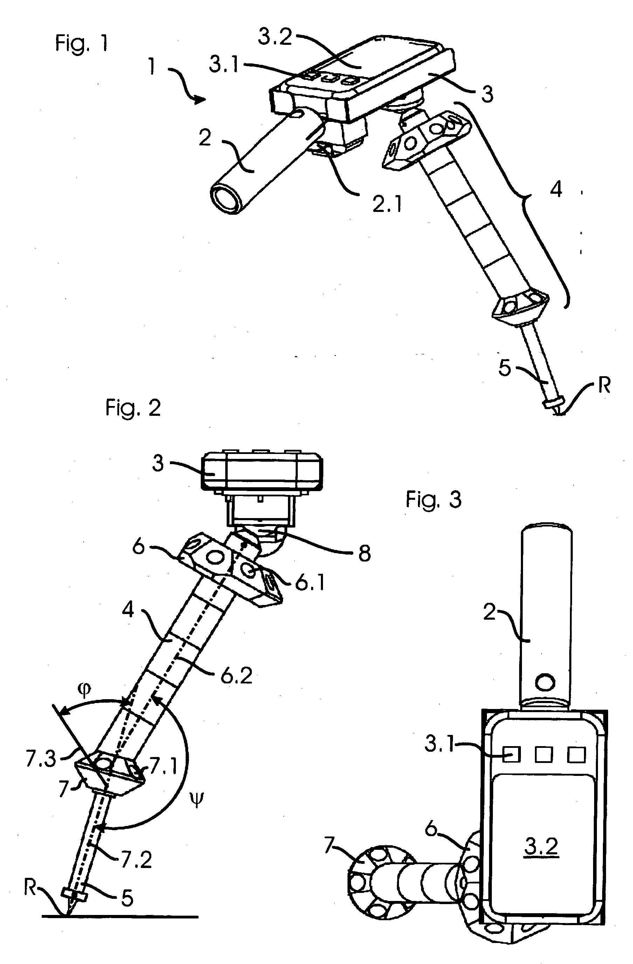

Fig. 1 zeigt ein tragbares Handgerät 1 nach einer Ausführung der vorliegenden Erfindung in perspektivischer Ansicht. Es umfasst eine Handhabungseinrichtung zur Handhabung des Handgerätes 1 durch einen Bediener mit einem zylindrischen Griff 2 für den Bediener und einer Ein-Ausgabeeinrichtung 3 in Form eines kompakten, tragbaren Computers, beispielsweise eines PDAs, mit einer Tastatur 3.1 zur Eingabe von Befehlen durch den Bediener und einer Anzeige 3.2 zur Anzeige von Informationen. Der PDA 3 ist lösbar an dem Griff 2 befestigt, der auf einer Griffunterseite (unten in Fig. 1) einen Zustimmungsschalter 2.1 aufweist.

Mittels eines Kugelgelenkes 8 (vgl. Fig. 2) ist eine Positionserfassungseinrichtung 4 gelenkig mit der Handhabungseinrichtung 3 verbunden und kann relativ zu dieser verschwenkt und verdreht werden. Dabei sind die Drehfreiheitsgrade selbstsperrend, indem das Kugelgelenk 8 eine entsprechend hohe Reibung aufweist, die Handhabungseinrichtung 3 und Positionserfassungseinrichtung 4 gegeneinander fixiert und nur durch den Bediener unter Aufbringung einer zusätzlichen Bedienkraft zur Überwindung der Reibung gelöst werden kann. Das Kugelgelenk 8 behält also ohne Eingriff durch den Bediener die jeweilige Relativstellung zwischen Handhabungseinrichtung 3 und Positionserfassungseinrichtung 4 bei, der Bediener kann jedoch Handhabungseinrichtung 3 und Positionserfassungseinrichtung 4 im Kugelgelenk 8 gegeneinander verschwenken und verdrehen.

Mit der Positionserfassungseinrichtung 4 ist ein auswechselbares Tastelement 5 lösbar verbunden, welches im Wesentlichen die Form einer Außenkontur eines Schweißwerkzeugs aufweist, und an dessen Spitze ein Referenzpunkt R definiert ist, der dem TCP eines tatsächlichen, manipulatorgeführten Schweißwerkzeugs entspricht.

Zur Erfassung der Raumposition des Referenzpunktes R auf Basis der Raumposition der Positionserfassungseinrichtung 4 wird diese durch eine optische Trackingeinrichtung (nicht dargestellt) erfasst. Hierzu erstreckt sich ein erster Ring 6 derart um die im Wesentlichen zylindrische Positionserfassungseinrichtung 4, dass seine Mittelsenkrechte 6.2 mit der Symmetrie- und Längsachse der Positionserfassungseinrichtung 4 zusammenfällt. In entsprechender Weise erstreckt sich ein zweiter Ring 7 derart um das im Wesentlichen ebenfalls zylindrische Tastelement 5, dass seine Mittelsenkrechte 7.2 mit dessen Symmetrie- und Längsachse zusammenfällt, die in der in Fig. 2 dargestellten Erfassungsstellung im Wesentlichen senkrecht auf der Werkstückoberfläche steht, wie es auch der Stoß- bzw. Führungsrichtung des tatsächlichen Schweißwerkzeugs entspricht. Die Längsachsen von Positionserfassungseinrichtung 4 und Tastelement 5 und damit auch die Mittelsenkrechten 6.2, 7.2 der beiden Ringe 6, 6 schließen einen Winkel 180°-β von ungefähr 15° ein.

Über den Umfang beider Ringe 6, 7 sind jeweils kreisförmige, reflektierende Marker 6.1 bzw. 7.2 verteilt, die von CCD-Kameras der Trackingeinrichtung (nicht dargestellt) erfasst werden. Die Erfassungsrichtung der Marker 7.1, i.e. die Flächennormale 7.3 auf die flachen Marker, in der diese maximal reflektieren und entsprechend von den CCD-Kameras besonders gut erfasst werden können, ist in Fig. 2 für einen Marker des Ringes 7 durchgezogen eingezeichnet und, wie in Fig. 2 erkennbar, unter einem Winkel α von ca. 45° gegen die Längsachsen von Tastelement 5, i.e. Mittelsenkrechte 7.2 des Rings 7 geneigt.

Die Marker 6.1 des Ringes 6 sind jeweils in der selben Richtung wie ihre korrespondierenden Marker 7.1 des Ringes 7 ausgerichtet. Aufgrund der gegenüber der Mittelsenkrechten 7.2 um den Winkel von ungefähr 15° abweichenden Orientierung der Mittelsenkrechten 6.2 ergeben sich deshalb für jeden Marker 6.1 verschiedene Winkellagen der Marker 6.1 auf dem Ring 6. Mit anderen Worten richtet die Orientierung der Marker 6.1 sich nicht nach der Lage der Mittelsenkrechten 6.2, sondern nach der Lage der Mittelsenkrechten 7.2.

Oberer und unterer Ring 6, 7 weisen über den Umfang verteilte Trapezflächen auf, wobei in jeder Trapezfläche ein Marker angeordnet ist. Dabei sind die Marker bezüglich der jeweiligen Trapezfläche gleich ausgerichtet. Dementsprechend ist jede Trapezfläche der Marker des oberen Rings 6 verschieden zur Mittelsenkrechten 6.2 ausgerichtet. Wie in Fig. 2 zu sehen, ist die ganz links dargestellte Trapezfläche des oberen Rings 6 sehr steil und die ganz rechts dargestellte Trapezfläche des oberen Rings 6 sehr flach. Mit anderen Worten ist eine Trapezfläche des oberen Rings 6 in einem bestimmten Segment stets parallel zu der Trapezfläche des unteren Rings 7 ausgerichtet.

Wird das Tastelement 5, das die Form eines Dummy-Werkzeuges aufweist, mit seinem Referenzpunkt R in einem zu erfassenden Arbeitspunkt auf der in Fig.2 durch eine horizontale Linie angedeutete Werkstückoberfläche derart aufgesetzt, dass seine Längsachse 7.2 im Wesentlichen normal zur Werkstückoberfläche orientiert ist, sind damit die Erfassungsrichtungen der Marker 7.1 im Wesentlichen unter 45° gegen die Werkstückoberfläche geneigt. Die CCD-Kameras der Trackingeinrichtung (nicht dargestellt) sind zur optimalen Erfassung ebenfalls im Wesentlichen unter 45° gegen die Werkstückoberfläche geneigt, so dass sie im Wesentlichen direkt auf Marker 7.1 blicken und diese maximal in die CCD-Kameras reflektieren. Auch die Marker 6.1 des Ringes 6 der demgegenüber um 15° abgeknickten Positionserfassungseinrichtung 4 sind gegen die Mittelsenkrechte 7.2 des unteren Rings 7 unter etwa 45° geneigt und damit von den CCD-Kameras sehr gut erfassbar.

Durch den Knick zwischen den Mittelsenkrechte 6.2, 7.2 der Ringe 6, 7 wird, wie insbesondere in der Draufsicht der Fig. 3 erkennbar, eine vollständige optische Verdeckung des Ringes 7 durch den Ring 6 verhindert und so eine Erfassbarkeit beider Markerringe 6, 7 aus einer Vielzahl von Kamerapositionen und in einer Vielzahl unterschiedlicher Orientierungen des Handgeräts 1 gewährleistet.

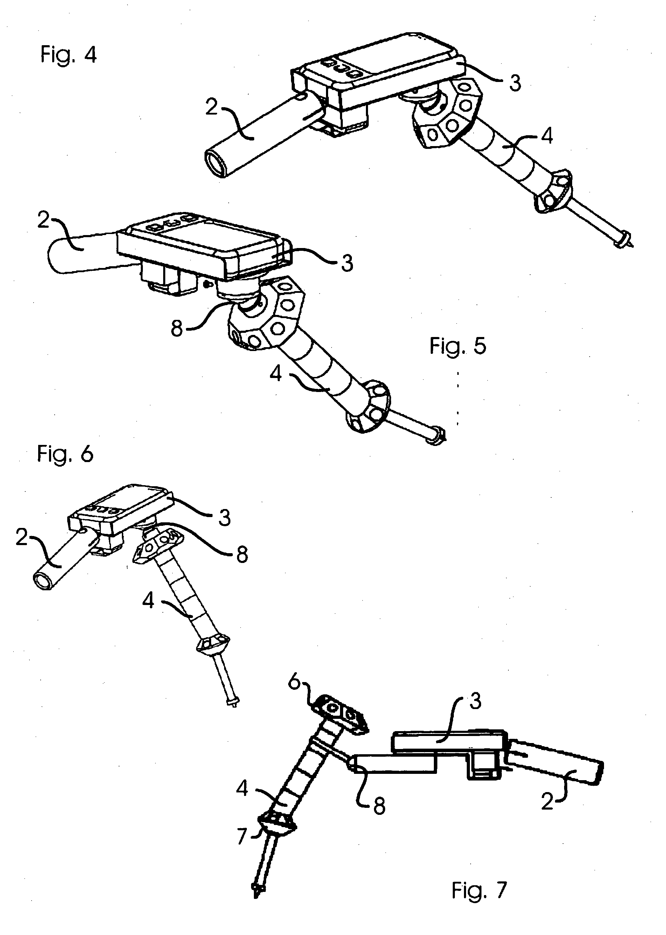

Wie in den Fig. 4 bis 6 exemplarisch dargestellt, können durch Verschwenken und Verdrehen der Positionserfassungseinrichtung 3 im Kugelgelenk 8 gegen die Handhabungseinrichtung 2, 3 bei gleichbleibend guter ergonomischer Positionierung von Griff 2, Anzeige 3.2 und Tastatur 3.1 eine Vielzahl unterschiedlicher Orientierungen des Dummy-Werkzeugs 5 dargestellt werden, wobei durch die vorgenannte Ausbildung der Positionserfassungseinrichtung 3 stets eine gute Erfassbarkeit von Markern 6.1, 7.1 durch die optische Trackingeinrichtung ermöglicht wird und durch die unbewegliche Befestigung des Tastelementes 5 an der Positionserfassungseinrichtung 3 die Transformation von dem Referenzpunkt R in ein positionserfassungseinrichtungsfestes Koordinatensystem, dessen Position durch die Marker 6.1, 7.1 bestimmbar ist, konstant ist.

Durch Betätigen eines Schalters 3.1 kann der Bediener eine Zusatzachse eines Kipp-Dreh-Tisches (nicht dargestellt) verstellen und so ein auf diesem Tisch fixiertes Werkstück, auf dem er mit dem Handgerät 1 Arbeitspunkte erfassen möchte, bewegen. Dabei kann es sich auch um einen Multifunktionsschalter handeln, der die Zusatzachse nur dann verstellt, wenn zuvor ein entsprechendes Menü aufgerufen wurde. In einer nicht dargestellten Abwandlung ist die Anzeige 3.2 als Touchscreen ausgebildet, auf der ein oder mehrere Eingabeschalter definiert sind

In Fig. 2 ist die Lage des handgerätfesten Referenzpunktes R in der Erfassungsstellung auf der Werkstückoberfläche erkennbar. Ohne Mess- und Rechenfehler wird somit die Raumposition dieses Referenzpunktes auf der Werkstückoberfläche als Raumposition eines Arbeitspunktes abgespeichert. Durch Mess- oder Rechenfehler kann die Raumposition des gespeicherten Arbeitspunktes jedoch fälschlich innerhalb der Werkstückkontur liegen (unter dem horizontalen Strich in Fig. 2), was bei Ausführen eines Programms mit dieser falschen gespeicherten Raumposition dazu führt, dass die Schweißwerkzeugspitze mit dem Werkstück kollidiert. Daher wird nach einem erfindungsgemäßen Verfahren die Hauptrichtung, die durch das Tastelement 5 definiert ist, , d.h. im allgemeinen die Werkzeugstoßrichtung als Verschieberichtung vorgegeben. Schon bei der Speicherung der Raumposition oder auch erst bei einer Nachbearbeitung oder Kontrolle der gespeicherten Arbeitspunkte kann der Bediener durch Eingabe eines entsprechenden Verschiebebetrags die gespeicherte falsche Position in der vorgegebenen Verschieberichtung gezielt und definiert aus dem Werkstück verschieben und diese verschobene Position als Arbeitspunkt des Manipulators abspeichern. Auf diese Weise wird die kollisionsfreie Raumposition außerhalb des Werkstückes als Soll-Arbeitspunkt abgespeichert. Später kann beim Anfahren mit dem Manipulatorwerkzeug dieses wieder entlang der Verschiebeachse bis zum Auftreffen auf der Werkstückoberfläche verschoben werden.

### Bezugszeichenliste

- 1: Handgerät
- 2: Griff (Handhabungseinrichtung)
- 2.1: Zustimmungsschalter
- 3: tragbarer Computer (Handhabungseinrichtung)
- 3.1: Taste (Eingabeeinrichtung)
- 3.2: Anzeige (Ausgabeeinrichtung)
- 4: Positionserfassungseinrichtung
- 5: Tastelement
- 6, 7: Markerring
- 6.1, 7.1: reflektierender Marker
- 6.2, 7.2: Mittelsenkrechte
- 8: Kugelgelenk

- α: Winkel zwischen Erfassungs- und Hauptrichtung
- 180°-β: Winkel zwischen Mittelsenkrechten der Markerringe
- R: Referenzpunkt (TCP)

## Patentansprüche

1. Tragbares Handgerät (1) zur Erfassung der Raumposition eines Arbeitspunktes eines Manipulators, insbesondere eines Roboters, mit
einer Handhabungseinrichtung (2, 3) zur Handhabung des Handgerätes durch einen Bediener, die eine Eingabeeinrichtung (3.1) zur Eingabe durch den Bediener aufweist;
einer Positionserfassungseinrichtung (4), deren Raumposition erfassbar ist; und einem mit der Positionserfassungseinrichtung, insbesondere lösbar, verbundenen Tastelement (5), an dem ein Referenzpunkt (R) definiert ist;
**dadurch gekennzeichnet, dass**
die Eingabeeinrichtung (3.1) zur Steuerung einer Zusatzachse des Manipulators, insbesondere eines Werkzeugtisches eingerichtet ist.

2. Handgerät (1) nach Anspruch 1,
**dadurch gekennzeichnet, dass**
die Handhabungseinrichtung (2, 3) und die Positionserfassungseinrichtung (4) gelenkig miteinander verbunden sind.

3. Handgerät nach Anspruch 2, **dadurch gekennzeichnet, dass** Handhabungseinrichtung und Positionserfassungseinrichtung, insbesondere lösbar, in einem Drehgelenk (8) mit wenigstens einem, insbesondere sperrbaren oder selbstsperrenden, Drehfreiheitsgrad miteinander verbunden sind.

4. Handgerät nach einem der vorhergehenden Ansprüche, **dadurch gekennzeichnet, dass** die Handhabungseinrichtung eine Ausgabeeinrichtung (3.2) zur Ausgabe an den Bediener und/oder einen Griff (2) für den Bediener aufweist.

5. Handgerät nach Anspruch 4, **dadurch gekennzeichnet, dass** in einem Griff (2) der Handhabungseinrichtung ein Zustimmungsschalter (2.1) angeordnet ist

6. Handgerät nach einem der vorhergehenden Ansprüche, **dadurch gekennzeichnet, dass** das Tastelement oder die Positionserfassungseinrichtung und das mit ihr verbundene Tastelement im Wesentlichen die Form wenigstens eines Teils einer Außenkontur eines Manipulatorwerkzeugs aufweisen.

7. Handgerät nach einem der vorhergehenden Ansprüche, **dadurch gekennzeichnet, dass** die Positionserfassungseinrichtung wenigstens einen aktiven und/oder passiven Marker (6.1, 7.1) und/oder wenigstens einen Sensor zur Erfassung der Raumposition aufweist.

8. Handgerät nach Anspruch 7, **dadurch gekennzeichnet, dass** die Positionserfassungseinrichtung mehrere Marker (6.1, 7.1) und/oder Sensoren aufweist, die über den Umfang wenigstens eines Ringes (6, 7) verteilt sind, der sich um die, insbesondere im Wesentlichen zylindrische, Positionserfassungseinrichtung herum erstreckt.

9. Handgerät nach Anspruch 8, **dadurch gekennzeichnet, dass** die Positionserfassungseinrichtung einen ersten Ring (6) und einen zweiten Ring (7) aufweist, über deren Umfang jeweils Marker (6.1, 7.1) und/oder Sensoren verteilt sind, wobei die Mittelsenkrechten (6.2) des ersten Ringes (6) mit der Mittelsenkrechten (7.2) des zweiten Ringes (7) einen Winkel (180°-β) ungleich 0°, insbesondere größer oder gleich 10° einschließt.

10. Handgerät nach einem der vorhergehenden Ansprüche, **dadurch gekennzeichnet, dass** einer Erfassungsrichtung wenigstens eines Markers (6.1, 7.1) und/oder Sensors unter einem Winkel (α) gegen eine Hauptrichtung des, insbesondere im Wesentlichen zylindrischen, Tastelementes und/oder der, insbesondere im Wesentlichen zylindrischen, Positionserfassungseinrichtung geneigt ist, der zwischen 15° und 75°, insbesondere zwischen 30° und 60° liegt.

11. Verfahren zum Erfassen der Raumposition eines Arbeitspunktes eines Manipulators, insbesondere eines Roboters, wobei eine Raumposition eines Referenzpunktes (R) eines Handgerätes (1), insbesondere nach einem der vorhergehenden Ansprüche, erfasst wird;
**dadurch gekennzeichnet, dass** eine Position, die gegenüber der erfassten Raumposition in einer vorgegebenen Richtung verschoben ist, als Arbeitspunkt des Manipulators bestimmt wird, wobei der an einem Tastelement (5) des Handgerätes definierte Referenzpunkt einem Tool Center Point des Manipulators entspricht und/oder die als Arbeitspunkt des Manipulators bestimmte Position gegenüber der erfassten Raumposition des Referenzpunktes um einen eingegebenen Verschiebebetrag verschoben wird.

12. Computerprogrammprodukt mit Programmcode, der auf einem maschinenlesbaren Träger gespeichert ist und ein Computerprogramm umfasst, das ein Verfahren nach Anspruch 11 ausführt, wenn es in einem Computer abläuft.

## Claims

1. A portable hand-held device (1) for detecting a spatial position of a working point of a manipulator, in particular of a robot comprising
a handling means (2, 3) for handling the hand-held device by a user, wherein the handling means has an input means (3.1) for input by the user;
a position detection means (4) that has a spatial position, which is detectable; and
a tactile element (5) that is connected to a position detection means, in particular detachably, and that has a reference point (R) defined thereon;
**characterized in that**
the input means (3.1) is adjusted for controlling an additional axis of the manipulator, in particular a tool bench.

2. A hand-held device (1) according to claim 1,
**characterized in that**
the handling means (2, 3) and the position detection means (4) are connected to each other in a jointed way.

3. A hand-held device according to claim 2, **characterized in that** handling means and position detection means are connected to each other, in particular detachably, in a revolution joint (8) with at least one, in particular lockable or self-locking, rotary degree of freedom.

4. A hand-held device according to one of the preceding claims, **characterized in that**, the handling means comprises an output means (3.2) for output to the user and/or a handle (2) for the user.

5. A hand-held device according to claim 4, **characterized in that** in a handle (2) of the handling means a confirmation switch (2.1) is arranged.

6. A hand-held device according to one of the preceding claims, **characterized in that** the tactile element or the position detection means and the tactile element connected thereto comprises essentially the form of at least a part of an outer contour of a manipulator tool.

7. A hand-held device according to one of the preceding claims, **characterized in that** the position detection means comprises at least one active and/or passive marker (6.1, 7.1) and/or at least one sensor for detection of a spatial position.

8. A hand-held device according to claim 7, **characterized in that** the position detection means comprises a plurality of markers (6.1, 7.1) and/or sensors that are distributed around a circumference of at least one ring (6, 7) that extends around the, in particular essentially cylindrical, position detection means.

9. A hand-held device according to claim 8, **characterized in that** the position detection means comprises a first ring (6) and a second ring (7), that have respective markers (6.1, 7.1) and/or sensors distributed around their circumference, wherein the perpendicular bisectors (6.2) of the first ring (6) includes with the perpendicular bisector (7.2) of the second ring (7) an angle (180°-β) unequal 0°, in particular greater than or equal 10°.

10. A hand-held device according to one of the preceding claims, **characterized in that** a detection direction of at least one marker (6.1, 7.1) and/or sensor is slanted under an angle (α) against a main direction of the, in particular essentially cylindrical, tactile element and/or of the, in particular essentially cylindrical, position detection means, which lies between 15° and 75°, in particular between 30° and 60°.

11. A method for detecting the spatial position of a working point of a manipulator, in particular a robot, wherein a spatial position of a reference point (R) of a hand-held device (1), is detected, in particular according to one of the preceding claims; **characterized in that** a position that is shifted against the detected spatial position in a predefined direction is determined as working point of the manipulator, wherein the reference point, which is defined at a tactile element (5) of the hand-held device, corresponds to a tool center point of the manipulator and/or the position determined as working point of the manipulator is shifted against the detected spatial position of the reference point by an inputted shifting quantity.

12. A computer program product with program code that is stored on a machine-readable carrier and comprises a computer program that is carrying-out a method according to claim 11, if it runs in a computer.

## Revendications

1. Appareil manuel portatif (1) permettant de déterminer la position spatiale d'un point de travail d'un manipulateur, en particulier d'un robot, pourvu
d'un dispositif de manipulation (2, 3) permettant à un opérateur de manipuler l'appareil manuel et présentant un dispositif de saisie (3.1) permettant à l'opérateur de faire une saisie ;
d'un dispositif de détermination de position (4) dont la position spatiale peut être déterminée ; et
d'un élément palpeur (5) relié, en particulier de manière détachable, au dispositif de détermination de position, et sur lequel un point de référence (R) est défini ;
**caractérisé en ce que** le dispositif de saisie (3.1) est conçu pour commander un axe supplémentaire du manipulateur, en particulier d'un plateau porte-outil.

2. Appareil manuel (1) selon la revendication 1,
**caractérisé en ce que** le dispositif de manipulation (2, 3) et le dispositif de détermination de position (4) sont reliés ensemble de manière articulée.

3. Appareil manuel selon la revendication 2,
**caractérisé en ce que** le dispositif de manipulation et le dispositif de détermination de position, sont reliés ensemble en particulier de manière détachable, dans une articulation tournante (8) pourvue d'au moins un degré de liberté de rotation, en particulier pouvant être bloqué ou à blocage automatique.

4. Appareil manuel selon l'une quelconque des revendications précédentes, **caractérisé en ce que** le dispositif de manipulation comprend un dispositif de sortie (3.2) offrant un affichage à l'opérateur et/ou une poignée (2) pour l'opérateur.

5. Appareil manuel selon la revendication 4, **caractérisé en ce qu'**un interrupteur de validation (2.1) est disposé dans une poignée (2) du dispositif de manipulation.

6. Appareil manuel selon l'une quelconque des revendications précédentes, **caractérisé en ce que** l'élément palpeur ou le dispositif de détermination de position et l'élément palpeur relié à ce dispositif présentent sensiblement la forme d'au moins une partie d'un contour extérieur d'un outil manipulateur.

7. Appareil manuel selon l'une quelconque des revendications précédentes, **caractérisé en ce que** le dispositif de détermination de position comprend au moins un marqueur (6.1, 7.1) actif et/ou passif et/ou au moins un capteur permettant de déterminer la position spatiale.

8. Appareil manuel selon la revendication 7, **caractérisé en ce que** le dispositif de détermination de position comprend plusieurs marqueurs (6.1, 7.1) et/ou capteurs, lesquels sont répartis sur la périphérie d'au moins un anneau (6, 7), lequel s'étend autour du dispositif de détermination de position, en particulier sensiblement cylindrique.

9. Appareil manuel selon la revendication 8, **caractérisé en ce que** le dispositif de détermination de position comprend un premier anneau (6) et un second anneau (7), sur la périphérie desquels des marqueurs (6.1, 7.1) et/ou des capteurs sont répartis, les médiatrices (6.2) du premier anneau (6) formant avec les médiatrices (7.2) du second anneau (7) un angle (180°-β) différent de 0°, en particulier supérieur ou égal à 10°.

10. Appareil manuel selon l'une quelconque des revendications précédentes, **caractérisé en ce qu'**une direction de détection d'au moins un marqueur (6.1, 7.1) et/ou d'un capteur est inclinée selon un angle (α) par rapport à une direction principale de l'élément palpeur, en particulier sensiblement cylindrique, et/ou du dispositif de détermination de position sensiblement cylindrique, lequel angle est compris entre 15° et 75°, en particulier entre 30° et 60°.

11. Procédé de détermination de la position spatiale d'un point de travail d'un manipulateur, en particulier d'un robot, une position spatiale d'un point de référence (R) d'un appareil manuel (1), en particulier selon l'une quelconque des revendications précédentes, étant déterminée ;
**caractérisé en ce qu'**une position décalée dans une direction prédéfinie par rapport à la position spatiale déterminée est définie comme le point de travail du manipulateur, le point de référence défini sur un élément palpeur (5) de l'appareil manuel correspondant à un point d'effecteur du manipulateur et/ou la position définie comme le point de travail du manipulateur étant décalée d'une grandeur de décalage saisie par rapport à la position spatiale déterminée du point de référence.

12. Produit-programme informatique pourvu d'un code de programme, lequel est mis en mémoire sur un support lisible par ordinateur et comprend un programme informatique, lequel met en oeuvre un procédé selon la revendication 11 lorsque celui-ci se déroule dans un ordinateur.
